# EUROPÄISCHE PATENTSCHRIFT

(11) **EP 3 228 897 B1**
(45) Veröffentlichungstag und Bekanntmachung des Hinweises auf die Patenterteilung: **25.04.2018**
(21) Anmeldenummer: 17164874.4
(22) Anmeldetag: 04.04.2017
(51) Int. Cl.: F16D 65/56, F16D 55/224

(54) **BREMSE MIT SYMMETRISCHEM VERSCHLEISSNACHSTELLER**
BRAKE WITH SYMMETRICAL WEAR ADJUSTER
FREIN COMPRENANT UN DISPOSITIF DE RÉGLAGE SYMÉTRIQUE EN FONCTION DE L'USURE

(30) Priorität: 05.04.2016 DE 102016205639; 08.04.2016 DE 102016205961
(43) Veröffentlichungstag der Anmeldung: 11.10.2017
(73) Patentinhaber: KES Keschwari Electronic Systems GmbH & Co. KG, 30890 Barsinghausen (DE)
(72) Erfinder: Keschwari Rasti, Mahmud, 30890 Barsinghausen (DE)
(74) Vertreter: Taruttis, Stefan Georg

(56) Entgegenhaltungen:
- WO-A1-2008/072742
- DE-A1- 2 607 348
- US-A- 3 190 399

## Beschreibung

Die vorliegende Erfindung betrifft eine Krafterzeugungseinrichtung, die einen symmetrischen Verschleißnachsteller aufweist, für eine Bremse, bzw. eine Bremse mit symmetrischem Verschleißnachsteller. Die Bremse weist bevorzugt eine Bremszange mit Zangenarmen auf, an denen endständig Bremsbacken angebracht sind und die durch einen Bremszylinderkolben gegeneinander schwenkbar angetrieben sind. Die erfindungsgemäße Krafterzeugungseinrichtung bzw. eine damit angetriebene Bremszange hat den Vorteil, dass der Verschleißnachsteller in derselben linearen Bewegungsachse liegt, durch die Kraft des Bremszylinderkolbens auf die Bremszange übertragen wird und dass bevorzugt der Verschleißnachsteller symmetrisch zur Kraftübertragung des Bremszylinderkolbens aufgebaut sein kann.

### Stand der Technik

Die DE 195 09 540 C1 beschreibt eine Bremszange für eine Scheibenbremse, deren Zangenarme durch einen etwa mittig an einem der Zangenarme exzentrisch gelagerten Dreharm gegeneinander verschwenkt werden, der durch einen Bremszylinderkolben gedreht wird. Gegenüber den endständig an den Zangenarmen angebrachten Bremsbacken ist zwischen den Enden der Zangenarme ein Verschleißnachsteller mit einer Spindel angeordnet, die dadurch ausgefahren wird, dass die Spindelmutter durch eine Steuerstange gedreht wird, die sich entlang eines Zangenarms erstreckt und über einen Hebelarm angetrieben ist, der am Dreharm angeordnet ist.

Die DE 43 30 440 A1 beschreibt eine Bremszange für eine Scheibenbremse, an deren Zangenarmen etwa mittig eine Anordnung aus einem Kraftspeicher angreift, der durch eine Verstellvorrichtung geschwenkt wird und über eine Steuerkurve auf einen Kipphebel wirkt, so dass die Zangenarme und die an einem Ende angebrachten Bremsbacken aufeinander zu geschwenkt werden. An dem Zangenende gegenüber den Bremsbacken ist ein Verschleißnachsteller angeordnet, der ein Getriebe und einen Stellmotor aufweist.

Der vorgenannte Stand der Technik hat den Nachteil, dass ein Verschleißnachsteller an einem Ende der Zangenarme gegenüber den Bremsbacken angeordnet ist, während die Krafterzeugungseinrichtung der Bremszange etwa mittig an den Zangenarmen angreift.

Die EP 2 154 391 B1 beschreibt eine Krafterzeugungseinrichtung einer Bremszange mit einem Bremszylinder, der auf einen Keil wirkt, der zwischen zwei Rollen geführt ist, um diese entlang einer linearen Bewegungsachse gegeneinander zu verschieben, die auf Träger wirken, die in der linearen Bewegungsachse liegen und endständig an Armen einer Bremszange angelenkt sind. Die eine Rolle wirkt auf eine Spindel, die in der linearen Bewegungsachse liegt und eine Spindelmutter aufweist, die abhängig von der Bewegung der Spindel gegen ein Gehäuse von einer bei dieser Bewegung komprimierten Feder gedreht wird und einen Verschleißnachsteller bildet.

Die WO 2008/015569 A2 beschreibt eine Bremszange mit einem zum Bremszylinderkolben symmetrischen Verschleißnachsteller, der in einem Innengewinde geführte Spindeln aufweist, die jeweils von einer Spiralfeder belastet sind.

WO2008072742 A1 offenbart eine Bremse nach dem Oberbegriff des Anspruchs 1.

### Aufgabe der Erfindung

Der Erfindung stellt sich die Aufgabe, eine alternative Bremszange für eine Scheibenbremse bereitzustellen, insbesondere eine Bremszange mit einem alternativen Verschleißnachsteller, der bevorzugt in einem gemeinsamen Gehäuse mit einem Bremszylinder angeordnet ist und insbesondere eine Krafterzeugungseinrichtung mit einem Verschleißnachsteller in einem Gehäuse aufweist, der insbesondere symmetrisch aufgebaut sein kann. Weiter bevorzugt soll die Bremszange eine direkte Messung der auf die Zangenarme wirkenden Kraft erlauben, die durch den auf den Bremszylinder wirkenden Druck erzeugt wird.

### Beschreibung der Erfindung

Die Erfindung löst die Aufgabe mit den Merkmalen der Ansprüche, insbesondere mit einer Bremse bzw. Bremszange, die an den Enden ihrer zwei Zangenarme jeweils Bremsbacken aufweist. An dem Ende der Zangenarme gegenüber den Bremsbacken ist zwischen den Zangenarmen eine Krafterzeugungseinrichtung angeordnet und zwischen den Enden der Zangenarme eine Verbindung, z.B. etwa mittig, um die die Zangenarme schwenkbar sind. Die Erfindung stellt daher eine Bremse mit zwei Zangenarmen bereit, zwischen denen eine Krafterzeugungseinrichtung angeordnet ist, wobei die Krafterzeugungseinrichtung zwei auf einer gemeinsamen linearen Bewegungsachse angeordnete Spindeln aufweist, deren erste Enden drehfest und entlang der linearen Bewegungsachse verschieblich in einer Spindelführung angeordnet sind, wobei die den ersten Enden gegenüberliegenden zweiten Enden der Spindeln an den Zangenarmen angelenkt sind, mit jeder Spindel eine Spindelmutter in Eingriff steht und die Spindelmuttern durch einen mit Druck beaufschlagbaren Bremszylinderkolben in entgegengesetzte Richtungen entlang der linearen Bewegungsachse belastbar sind, wobei die Spindeln und/oder die Spindelmuttern zur Drehung der Spindeln und der Spindelmuttern relativ zueinander durch zumindest einen Motor, bevorzugt durch genau einen Motor, angetrieben sind. Die Spindeln sind relativ gegen die Spindelmuttern drehbar, z.B. können die Spindeln drehangetrieben sein, während die Spindelmuttern drehfest im Gehäuse geführt sind, oder die Spindelmuttern sind drehangetrieben und die Spindeln sind drehfest im Gehäuse geführt.

Die Krafterzeugungseinrichtung weist in einem Gehäuse zwei entlang einer gemeinsamen linearen Achse verschieblich geführte Spindeln auf, die mit ihren ersten Enden, die einander zugewandt sind, entlang der linearen Achse verschieblich an einer Spindelführung geführt sind. Diese Spindelführung ist daher koaxial zu den beiden Spindeln angeordnet, wobei jede Spindel mit einem ersten Ende verschieblich und optional drehfest an der Spindelführung geführt ist. Wenn die Spindeln drehfest in der Spindelführung geführt sind, drehen sich in dieser Ausführungsform beide Spindeln immer gemeinsam mit der Spindelführung, wenn diese drehbar in dem Gehäuse angeordnet ist, bzw. die Spindeln sind mit der Spindelführung drehfest am Gehäuse angeordnet. Alternativ kann die Spindelführung eingerichtet sein, die beiden Spindeln an ihren ersten Enden relativ zueinander drehbar zu führen, z.B. indem die Spindelführung in zwei gegeneinander drehbare Abschnitte geteilt ist, von denen jeder eine Spindel führt. Die Spindeln sind gegenüber der Spindelführung und gegenüber dem Gehäuse entlang der linearen Bewegungsachse verschieblich. Die Spindeln sind entlang ihrer linearen Achse verschieblich in einem Gehäuse geführt. Die Spindeln können an ihren der Spindelführung gegenüberliegenden Enden jeweils einen an der Spindel angebrachten Drehzapfen oder ein Drehlager aufweisen, um eine Drehbewegung der Spindeln nicht auf die angelenkte Bremszange zu übertragen. Die Spindeln bilden mit ihren Spindelmuttern einen Verschleißnachsteller für Verschleiß an den Bremsbelägen und der Bremsscheibe, wobei die Spindeln und Spindelmuttern bevorzugt symmetrisch zueinander bzw. zu einem Bremszylinderkolben angeordnet sind.

Die Spindeln weisen optional gegenläufige Gewinde auf, wobei die Spindelführung bevorzugt die Spindeln miteinander drehfest und entlang der linearen Achse verschieblich verbinden kann, z.B. die Spindelführung starr miteinander verbundene Abschnitte zur Führung der Spindeln allein entlang der linearen Achse aufweist, insbesondere wenn die Spindeln gegenläufige Gewinde aufweisen. Alternativ können die Spindeln gleichsinnige Gewinde aufweisen und sind optional zur gegenläufigen Drehung angetrieben, wobei die Spindelführung bevorzugt die Spindeln gegeneinander drehbar verbinden kann, z.B. gegeneinander drehbare Abschnitte zur Führung jeder Spindel entlang der linearen Achse aufweist. Mit jeder Spindel steht eine Gewindemutter in Eingriff. Bei Drehung der Spindeln relativ gegenüber ihren Spindelmuttern werden die Spindelmuttern entlang der linearen Bewegungsachse aufeinander zu oder voneinander weg symmetrisch entlang den Spindeln bewegt. Die relative Drehung der Spindeln gegenüber ihren Spindelmuttern ist motorisch getrieben, insbesondere durch einen Elektromotor. Der Motor kann auf eine Spindel wirken, z.B. die Spindelführung zur Drehung antreiben, die dann auch als Welle bezeichnet werden kann, oder auf die Spindelmuttern, wobei bevorzugt jede Spindelmutter von einem Motor angetrieben ist. Bei der motorisch angetriebenen Relativdrehung zwischen den Elementen, die einerseits die Spindeln und andererseits die Spindelmuttern sind, sind die Elemente, die gegenüber dem Gehäuse drehen bzw. drehangetrieben sind, parallel zur linearen Achse verschieblich und drehbar in dem Gehäuse geführt, und die jeweils anderen Elemente sind drehfest und parallel zur linearen Achse verschieblich am Gehäuse geführt.

Ein Elektromotor kann abhängig von einem Kraftaufnehmer gesteuert sein, der die Kraft bestimmt, die von einem Bremszylinderkolben auf zumindest eine Spindelmutter aufgebracht wird und/oder abhängig von einem Wegaufhehmer, der den Verfahrweg zumindest einer Spindel entlang ihrer linearen Achse aufnimmt. Ein Kraftaufnehmer kann z.B. zwischen dem Bremszylinderkolben und einer Spindelmutter angeordnet sein, z.B. zwischen einer Keilfläche und einer Spindelmutter. Ein Wegaufnehmer kann z.B. zwischen einer Spindelmutter und dem Gehäuse angeordnet sein. Der Kraftaufnehmer und/oder der Wegaufnehmer sind bevorzugt mit einer Datenleitung mit einem elektronischen Mikrokontroller verbunden, der eingerichtet ist, den Elektromotor abhängig von einem Signal des Kraftaufhehmers und/oder des Wegaufnehmers zu steuern.

In einer Variante ist der Wegaufnehmer eingerichtet, den Weg und/oder die Stellung der Spindelmutter relativ zur jeweiligen Spindel entlang der linearen Bewegungsachse aufzunehmen, insbesondere den relativen Weg der Spindelmuttern, über den diese bei Beaufschlagung des Bremszylinderkolbens mit Druck bewegt werden und/oder die Stellungen der Spindelmuttern, die diese bei Beaufschlagung des Bremszylinderkolbens mit Druck einnehmen. Da jede Spindel mit einer Spindelmutter in Eingriff steht, ist der Weg bzw. die Stellung der Spindelmutter durch Beaufschlagung des Bremszylinderkolbens mit Druck gleich dem Weg bzw. der Stellung der Spindel, wobei der Elektromotor steht bzw. die Spindel nicht gedreht wird. Der Wegaufhehmer ist bevorzugt ein berührungsfreier.

Optional ist der Kraftaufhehmer eingerichtet, die Kraft aufzunehmen, mit der der Bremszylinderkolben auf die Spindelmuttern wirkt oder mit der die Spindeln gegen die Bremszange wirken. Generell ist bevorzugt, dass ein Mikrokontroller, der den Elektromotor steuert, eingerichtet ist, in Abwesenheit von Druck auf den Bremszylinderkolben den Elektromotor zur Drehung der Spindeln zu steuern, bis der Kraftsensor eine steil ansteigende Kraft als Signal für einen Abstand der Bremsbacken aufnimmt, in dem daran angebrachte Bremsbeläge an einer Bremsscheibe anliegen, und der Mikrokontroller eingerichtet ist, den Elektromotor anschließend zur Drehung der Spindeln in Gegenrichtung um einen vorbestimmten Betrag zu steuern. In dieser Variante ist die Bremse dadurch zur Verschleißnachstellung eingerichtet, dass in dem Zustand, in dem der Bremszylinderkolben nicht die Spindelmuttern belastet, der Elektromotor die Spindeln dreht, bis der Kraftsensor dadurch die Stellung der Bremsbeläge anliegend an einer Bremsscheibe anzeigt, dass die gemessene Kraft steil ansteigt. In dieser Stellung der Spindeln liegen die Bremsbeläge an der Bremsscheibe an. Daher ist der Mikrokontroller eingerichtet, den Elektromotor zur Drehung der Spindeln in Gegenrichtung zu steuern, so dass ohne Druckbeaufschlagung des Bremszylinderkolbens die Spindeln in einer Stellung längs der linearen Bewegungsachse angeordnet sind, in der sie keine Kraft ausüben und die Bremsbeläge in einem Abstand von der Bremsscheibe liegen. Die Drehung der Spindeln in Gegenrichtung führt zur Bewegung der Spindeln in Richtung auf die Spindelführung, an der die Spindeln mit ihren ersten Enden verschieblich geführt sind. Die Drehung der Spindeln in Gegenrichtung erfolgt insbesondere um einen vorbestimmten Betrag, so dass die Spindeln die Zangenarme und daher auch die Bremsbeläge in einen vorbestimmten Abstand zueinander bringen. So kann die Drehung der Spindeln in Gegenrichtung erfolgen bis z.B. die Bremsbeläge jeweils einen vorbestimmten Abstand zueinander einnehmen, in dem einen vorbestimmten Abstand von der Bremsscheibe einnehmen.

Der Zustand, in dem der Bremszylinderkolben die Spindelmuttern nicht belastet, ist insbesondere ein Zustand, in dem der Zylinder, in dem der Bremszylinderkolben geführt ist, nicht mit Druck beaufschlagt ist und der Bremszylinderkolben auch nicht mittels eines Fortsatzes durch einen zweiten Kolben belastet wird, der z.B. in Abwesenheit von Betriebsdruck mittels einer zweiten Druckfeder gegen den K Bremszylinderkolben belastet wird.

Die Spindelmuttern werden durch die Wirkung eines Bremszylinderkolbens voneinander weg bewegt. Bevorzugt wirkt der Bremszylinderkolben durch Keilflächen, die zwischen dem Bremszylinderkolben und den Spindelmuttern angeordnet sind, auf die Spindelmuttern. Die Keilflächen sind bevorzugt symmetrisch zwischen den Spindelmuttern angeordnet, so dass beide Spindelmuttern bei Bewegung des Bremszylinderkolbens um den gleichen Betrag bewegt werden. Durch die Relativbewegung zwischen den Spindeln und den Spindelmuttern werden die der Spindelführung gegenüberliegenden Enden der Spindeln weiter voneinander beabstandet, insbesondere um die Bremszange um den Verschleiß von Bremsbelägen und Bremsscheibe nachzustellen, bzw. näher aufeinander zu bewegt, z.B. wenn neue Bremsbeläge eingesetzt werden sollen oder um die Bremse zu öffnen.

Der Bremszylinderkolben, der auf die Spindelmuttern wirkt, insbesondere zwischen den Spindelmuttern, z.B. durch symmetrische Keilflächen, und generell die Spindelmuttern voneinander weg belastet, übt den Bremsdruck aus, der über die Spindeln auf deren an der Bremszange angelenkte Enden wirkt. Keilflächen können am Bremszylinderkolben angebracht sein oder an den Spindelmuttern, insbesondere symmetrisch zur Längsachse des Bremszylinderkolbens bzw. zu dessen Bewegungsachse.

Zur Rückstellung der Spindeln gegen die durch den Bremszylinderkolben ausgeübte Belastung sind bevorzugt Federn zwischen den Seiten der Spindelmuttern, die dem Bremszylinderkolben bzw. den Keilflächen gegenüberliegt, und dem Gehäuse angeordnet.

Bevorzugt wirkt der Bremszylinderkolben symmetrisch auf die Spindelmuttern, insbesondere auf deren Stirnflächen, die einander zugewandt sind und belastet die Spindelmuttern in entgegengesetzte Richtungen.

In bevorzugter Ausführungsform sind die Spindelmuttern drehfest und parallel zur linearen Achse verschieblich am Gehäuse geführt und die Spindeln sind drehbar und entlang der linearen Achse verschieblich am Gehäuse geführt. In dieser Ausführungsform können die Spindeln dadurch motorisch drehangetrieben sein, dass die Spindelführung durch einen Motor angetrieben ist und als Welle für beide Spindeln wirkt. Denn in dieser Ausführungsform sind die beiden Spindeln mit ihren ersten Enden drehfest und entlang der linearen Achse verschieblich an der Spindelführung geführt, wobei die Spindeln bevorzugt gegenläufige Gewinde aufweisen, so dass die angetriebene Drehung der Spindelführung zur symmetrischen Drehung und Längsbewegung der Spindeln bei deren gegenläufigen Gewinde in entgegengesetzte Richtungen führt.

Alternativ können die Spindeln gleichsinnige Gewinde aufweisen und jeweils zur entgegengesetzten Drehung motorisch angetrieben sein, wobei die Spindelführung eingerichtet ist, die Spindeln entlang der linearen Achse verschieblich und drehbar zu führen, z.B. indem die Spindelführung für jede Spindel einen Abschnitt aufweist, in dem diese entlang der linearen Achse verschieblich geführt ist und die beiden Abschnitte gegeneinander drehbar sind, z.B. gegeneinander drehbar miteinander verbunden sind. Für den motorischen Antrieb in entgegengesetzte Drehrichtungen kann in dieser alternativen Ausführung jede Spindel durch einem gegenläufigen Motor angetrieben sein oder beide Spindeln können durch Getriebe mit einem gemeinsamen Motor verbunden sein, wobei ein Getriebe die Drehrichtung umkehrt.

Bei motorischem Drehantrieb der Spindeln ist bevorzugt, dass die Spindelführung motorisch angetrieben ist.

Der Motor kann z.B. mittels eines Getriebes mit der Spindelführung gekoppelt sein, das ein Zahnradgetriebe, ein Riemen- oder Kettengetriebe oder ein Schneckengetriebe ist.

Generell bevorzugt ist der Motor außerhalb der linearen Achse der Spindeln bzw. der Spindelmuttern angeordnet. Daraus ergibt sich der Vorteil, dass der Motor keine axialen Kräfte auf seinen Wellenstumpf aufnehmen muss.

Bei motorischem Antrieb der Spindelführung, in der die ersten Enden der Spindeln geführt sind, liegt ein Vorteil darin, dass sich die Spindelführung nicht im Gehäuse verschiebt und dass ein Motor mit einem Getriebe zum symmetrischen Antrieb beider Spindeln, in gleicher oder entgegengesetzter Drehrichtung, ausreichen kann.

Generell kann optional ein Drucksensor in dem Bremszylinder angeordnet sein, in dem der Bremszylinderkolben geführt ist, um den auf den Bremszylinderkolben wirkenden Druck aufzunehmen. Der Drucksensor und der Kraftaufnehmer sind bevorzugt mit einem elektronischen Mikrokontroller verbunden, der eingerichtet ist, das Messsignal des Kraftaufhehmers mit dem Messsignal des Drucksensors zu vergleichen, und ist weiter bevorzugt eingerichtet, Abweichungen des Verhältnisses zwischen dem Messsignal des Kraftaufnehmers und dem Messsignal des Drucksensors von einem vorbestimmten Wert oder Wertebereich anzuzeigen. In dieser Ausführung ist die Bremse eingerichtet, eine Fehlfunktion anzuzeigen, z.B. eine zu geringe Kraft bei im Zylinder anliegendem Druck.

Weiter optional kann der Mikrokontroller eingerichtet sein, den Weg zu bestimmen, um den eine Spindel durch Drehung mittels des Motors in Richtung auf das Gehäuse bewegt wurde und ist bevorzugt eingerichtet, das Erreichen eines vorbestimmten Wegs anzuzeigen, um den eine Spindel in ihrer Spindelmutter durch Drehung bewegt wurde. In dieser Ausführungsform ist die Bremse eingerichtet, das Erreichen eines vorbestimmten Verschleißes der Bremsbacken bzw. darauf angebrachter Bremsbeläge anzuzeigen. Dabei ist der Mikrokontroller bevorzugt eingerichtet, die jeweiligen Wege, um die eine Spindel durch Drehung mittels des Motors in Richtung auf das Gehäuse bewegt wird, aufzuaddieren und optional anzuzeigen, zu übermitteln und/oder mit einem vorgegebenen Wert zu vergleichen, wobei der vorgegebene Wert einem zulässigen Verschleiß der Bremsbeläge entspricht. Bevorzugt werden die jeweiligen Wege, um die die Spindel durch Drehung bewegt wird, durch den Wegaufnehmer bestimmt.

Weiter optional kann der Mikrokontroller eingerichtet sein, bei Anbringen von neuen Bremsbelägen, die eine vorbestimmte Dicke aufweisen, den Weg der Spindelmutter zu bestimmen, den diese bei anliegendem Bremsdruck in Richtung auf das erste Ende des Gehäuses zurücklegt und diesen Weg zu übermitteln, wobei dieser Weg als Maß für den Verschleiß der Bremsscheibe angezeigt werden kann. Dazu kann der Weg der Spindelmutter durch den Wegaufnehmer bestimmt werden. Alternativ kann der Mikrokontroller eingerichtet sein, die Drehungen, die um der Motor die Spindeln relativ zu ihren Spindelmuttern dreht, aufzunehmen und daraus den Weg zu berechnen, über den die Spindel entlang der linearen Bewegungsachse bewegt wird, bis der Kraftsensor durch eine steil ansteigende Kraft das Anliegen der Bremsbeläge an der Bremsscheibe anzeigt.

Bevorzugt ist der Mikrokontroller eingerichtet, z.B. mittels einer Elektronik, mit dem Bremssystem eines Schienenfahrzeugs verbunden zu werden, um Daten zu übermitteln. Dazu kann der Mikrokontroller z.B. eine Elektronik aufweisen, die ein Bussystem bildet, das kabellos oder kabelgebunden sein kann.

Die Krafterzeugungseinrichtung kann eine manuelle Steuerung aufweisen, mit der der Motor zur Drehung der Spindeln relativ zu ihren Spindelmuttern gesteuert wird, um die Spindeln in eine aneinander angenäherte Stellung zu verfahren, um in dieser Stellung die Bremszange zu öffnen und die Bremsbeläge auszutauschen. Zusätzlich kann die Krafterzeugungseinrichtung eine manuelle Steuerung aufweisen, mit der der Motor zur Drehung der Spindeln gesteuert wird, um diese in eine Stellung zu verfahren, in der die Bremsbeläge einen vorbestimmten Abstand zueinander bzw. zu einer zwischen ihnen angeordneten Bremsscheibe aufweisen. In dieser Ausführungsform erlaubt die Krafterzeugungseinrichtung ein motorisches Verfahren der Bremszange in eine geöffnete Stellung und bevorzugt ein motorisches Verfahren der Bremszange in eine Stellung der Bremsbeläge in einen gewünschten Abstand zueinander bzw. zu einer Bremsscheibe.

Die Erfindung wird nun genauer mit Bezug auf die Figuren beschrieben, die schematisch in
- Figur 1 eine Ausführungsform der Krafterzeugungseinrichtung mit am Bremszylinderkolben anliegendem Bremsdruck,
- Figur 2 die Ausführungsform von Figur 1 ohne anliegenden Bremsdruck und in
- Figur 3 eine weitere Ausführungsform der Krafterzeugungseinrichtung mit am Bremszylinderkolben anliegendem Bremsdruck zeigen.

In den Figuren bezeichnen gleiche Bezugsziffern funktionsgleiche Elemente.

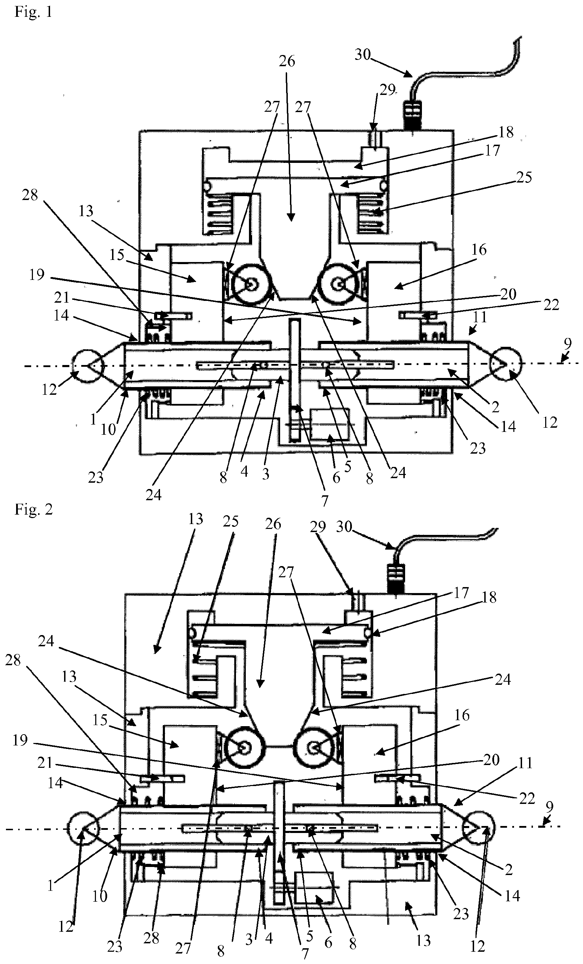

Die Figuren 1 und 2 zeigen eine Ausführungsform, bei der die erste Spindel 1 und die zweite Spindel 2 drehangetrieben sind, indem die Spindelführung 3 als Welle, in der das erste Ende 4 der ersten Spindel 1 und das erste Ende 5 der zweiten Spindel 2 drehfest geführt sind, durch einen Motor 6 drehangetrieben ist. Der Motor 6 ist über ein Getriebe 7, schematisch als Zahnradgetriebe gezeigt, mit der Spindelführung 3 gekoppelt. Generell kann die Spindelführung 3 abschnittsweise innerhalb der Spindeln 1, 2 geführt sein. Die erste Spindel 1 und die zweite Spindel 2 sind durch jeweils eine Linearführung 8, z.B. einen Längsschlitz in der Spindelführung 3 und einen darein eingreifenden Stift jeder Spindel 1, 2, drehfest und längs der linearen Achse 9 an der Spindelführung 3 geführt. Dabei ist die lineare Achse 9, auch als lineare Bewegungsachse bezeichnet, die gemeinsame Drehachse der Spindeln 1, 2 und der Spindelführung 3. Am zweiten Ende 10 der ersten Spindel 1, das deren erstem Ende 4 gegenüberliegt und am zweiten Ende 11 der zweiten Spindel 2, das deren erstem Ende 5 gegenüberliegt, ist jeweils ein Anschluß 12, z.B. in Form eines Drehlagers, zur Anlenkung an eine Bremszange angebracht. Die Spindeln 1, 2 sind am Gehäuse 13 längs der linearen Achse 9 verschieblich geführt, z.B. in Öffnungen 14 des Gehäuses 13.

Die erste Spindel 1 steht mit einer ersten Spindelmutter 15 in Eingriff und die zweite Spindel 2 steht mit einer zweiten Spindelmutter 16 in Eingriff. Die Spindelmuttern 15, 16 sind durch den Bremszylinderkolben 17, der im Bremszylinder 18 mit Druck beaufschlagt werden kann, entlang der linearen Achse 9 belastet, wobei durch anliegenden Bremsdruck der Bremszylinderkolben 17 gegen die einander zugewandten Seite 19 der ersten Spindelmutter 15 und Seite 20 der zweiten Spindelmutter 16 wirkt und diese in entgegengesetzte Richtungen belastet. Die Spindeln 1, 2 weisen hier gegenläufige Gewinde auf, so dass sich bei Drehung der Spindeln 1, 2 relativ zu den Spindelmuttern 15, 16 die Spindeln 1, 2 in entgegengesetzte Richtungen entlang der linearen Achse 9 bewegen.

Der Bremszylinderkolben 17 läuft in der gezeigten Ausführungsform in seinem Bremszylinder 18 etwa senkrecht zur linearen Achse 9 und wirkt über symmetrische Keilflächen 24 auf die einander zugewandten Seiten 19, 20 der Spindelmuttern 15, 16. Die Keilflächen 24 können wie gezeigt durch einen Fortsatz 26 am Bremszylinderkolben 17 angebracht sein oder alternativ an den Seiten 19, 20 der Spindelmuttern 15, 16. Der Bremszylinder 18 weist einen Anschluß 29 für ein Druckmedium auf, insbesondere für Bremsdruckluft.

Alternativ kann der Bremszylinderkolben 17 über Druckstangen oder Hebel auf die Spindelmuttern 15, 16 wirken.

Die erste Spindelmutter 15 ist durch eine erste Führung 21 parallel zur linearen Achse 9 verschieblich und drehfest in dem Gehäuse 13 geführt, die zweite Spindelmutter 16 ist durch eine zweite Führung 22 parallel zur linearen Achse 9 verschieblich und drehfest in dem Gehäuse 13 geführt. Die erste und zweite Führung 21, 22 können z.B. als eine parallel zur linearen Achse 9 angeordnete Bohrung und ein darin längsverschieblich geführter Stift ausgeführt sein.

Die Spindeln 1, 2 sind durch Druckfedern 23, die zwischen dem Gehäuse 13 und der ersten bzw. zweiten Spindel 1, 2 angeordnet sind, gegen die Belastung durch den Bremszylinderkolben 17 belastet. Dabei sind die Druckfedern 23 gegen die Seiten der Spindelmuttern 15, 16 angeordnet, die deren Seiten 19, 20 gegenüberliegen, gegen die der Bremszylinderkolben 17 wirkt.

Die Figur 1 zeigt den Zustand der Krafterzeugungseinrichtung, in der der Bremszylinderkolben 17 durch Druck in seinem Bremszylinder 18 gegen die Spindelmuttern 15, 16 wirkt und diese durch die Keilflächen 24 in entgegengesetzte Richtungen auseinander belastet, so dass die Spindeln 1, 2 einen größeren Abstand zueinander haben, weiter aus dem Gehäuse 13 ragen und die Bremszange in eine Bremsstellung bewegen, in der die Bremsbeläge gegen eine dazwischen angeordnete Bremsscheibe gepresst werden.

Die Figur 2 zeigt den Zustand der Krafterzeugungseinrichtung, in der der Bremszylinderkolben 17 einen geringeren Druck in seinem Bremszylinder 18 erfährt und durch eine Rückstellfeder 25 in eine zurückgezogene Stellung bewegt ist und weniger stark gegen die Spindelmuttern 15, 16 wirkt. In diesem Zustand bewegen die Druckfedern 23 die Spindelmuttern 15, 16 und daher die mit diesen in Eingriff stehenden Spindeln 1, 2 in eine Stellung, in der sie weniger weit beabstandet sind, weniger aus dem Gehäuse 13 ragen und die Bremszange in eine offene Stellung bewegen.

Optional kann die Krafterzeugungseinrichtung einen Kraftaufnehmer 27 aufweisen, der eingerichtet ist, die Kraft aufzunehmen, die der Bremszylinderkolben 17 auf zumindest eine der Spindelmuttern 15, 16 ausübt. Ein Kraftaufnehmer 27 kann z.B. zwischen einer Keilfläche 24 und einer Spindelmutter 15, 16 angeordnet sein, wobei die Keilfläche 24 z.B. an der Seite 19, 20 der Spindelmutter 15, 16 angeordnet ist.

Optional kann die Krafterzeugungseinrichtung einen Wegaufhehmer 28 aufweisen, der eingerichtet ist, den Weg oder die Stellung zumindest einer Spindelmutter (15, 16) in dem Gehäuse zu bestimmen. Ein Wegaufnehmer 28 kann z.B. zwischen Spindelmutter und Gehäuse angeordnet sein.

In einer alternativen Ausführungsform, in der die Spindelmuttern 15, 16 drehangetrieben sind, sind die Spindeln 1, 2 drehfest und längsverschieblich in dem Gehäuse 13 geführt, z.B. dadurch, dass die ersten Enden 4, 5 der Spindeln 1, 2 drehfest und längsverschieblich in einer am Gehäuse 13 festgelegten Führung geführt sind (nicht gezeigt). Ein motorischer Drehantrieb der Spindelmuttern 15, 16 kann z.B. jeweils einen Motor aufweisen, der auf eine der Spindeln 1, 2 wirkt, wobei bevorzugt die Motoren für eine gleiche Umdrehungsgeschwindigkeit bzw. Umdrehungszahl der Spindelmuttern 15, 16 eingerichtet sind. In dieser alternativen Ausführungsform können die Spindeln 1, 2 gleichsinnige Gewinde aufweisen, wenn die Motoren eingerichtet sind, die Spindeln gegensinnig zu drehen, z.B. durch entgegengesetzte Drehrichtungen der Motoren oder durch Getriebe zwischen Motor und Spindelmutter, von denen eines die Drehrichtung umkehrt.

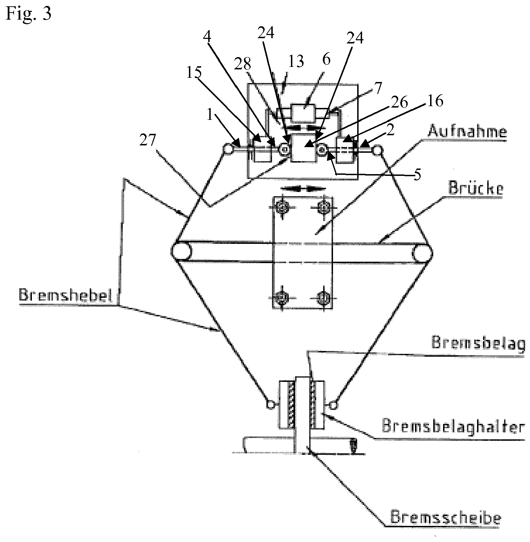

Die Figur 3 zeigt eine alternative Ausführungsform, in der die Spindeln 1, 2 drehfest und längsverschieblich in dem Gehäuse 13 geführt sind und ihre Spindelmuttern 15, 16 motorisch drehangetrieben sind. Die Spindeln 1, 2 können dadurch drehfest und längsverschieblich in dem Gehäuse 13 geführt sein, dass die Spindelführung 3 in dem Gehäuse 13 festgelegt ist und daher nur noch eine lineare Bewegung der Spindeln 1, 2 entlang der linearen Achse 9 zulässt. In Figur 3 sind die Keilflächen 24, die von einem Bremszylinderkolben 17 z.B. entsprechend Figur 1 angetrieben sind, im Schnitt durch einen am Bremszylinderkolben 17 angebrachten Fortsatz 26 gezeigt. Alternativ zu der gezeigten Ausführung des Drehantriebs der beiden Spindelmuttern 15, 16 kann jede Spindelmutter 15, 16 einen individuellen Antriebsmotor aufweisen.

Das Anschlusskabel 30 kann die Stromversorgung und/oder eine Steuerleitung für den Motor 6 sein und bevorzugt zusätzlich eine Datenleitung zur Übermittlung von Daten des Kraftaufhehmers 27 und/oder des Wegaufnehmers 28, insbesondere eine Datenleitung zu einem elektronischen Mikrokontroller.

**Bezugszeichenliste:**

| | |
|---|---|
| 1 erste Spindel | 16 zweite Spindelmutter |
| 2 zweite Spindel | 17 Bremszylinderkolben |
| 3 Spindelführung | 18 Bremszylinder |
| 4 erstes Ende der ersten Spindel | 19 Seite der Spindelmutter |
| 5 erstes Ende der zweiten Spindel | 20 Seite der Spindelmutter |
| 6 Motor | 21 erste Führung |
| 7 Getriebe | 22 zweite Führung |
| 8 Linearführung | 23 Druckfeder |
| 9 lineare Achse | 24 Keilfläche |
| 10 zweites Ende der ersten Spindel | 25 Rückstellfeder |
| 11 zweites Ende der zweiten Spindel | 26 Fortsatz |
| 12 Anschluß für Bremszange | 27 Kraftaufhehmer |
| 13 Gehäuse | 28 Wegaufhehmer |
| 14 Öffnungen | 29 Anschluß für Bremsdruck |
| 15 erste Spindelmutter | 30 Anschlusskabel |

## Patentansprüche

1. Bremse mit zwei Zangenarmen, zwischen denen eine Krafterzeugungseinrichtung angeordnet ist, wobei die Krafterzeugungseinrichtung zwei auf einer gemeinsamen linearen Bewegungsachse (9) angeordnete Spindeln (1, 2) aufweist **dadurch gekennzeichnet, dass** deren erste Enden (4, 5) drehfest und entlang der linearen Bewegungsachse (9) verschieblich in einer Spindelführung (3) angeordnet sind, die den ersten Enden (4, 5) gegenüberliegenden zweiten Enden (10, 11) der Spindeln (1, 2) an den Zangenarmen angelenkt sind, mit jeder Spindel (1, 2) eine Spindelmutter (15, 16) in Eingriff steht und die Spindelmuttern (15, 16) durch einen mit Druck beaufschlagbaren Bremszylinderkolben (17) in entgegengesetzte Richtungen entlang der linearen Bewegungsachse (9) belastbar sind und die Spindeln (1, 2) und die Spindelmuttern (15, 16) zur Drehung relativ zueinander durch einen Motor (6) angetrieben sind.

2. Bremse nach Anspruch 1, **dadurch gekennzeichnet, dass** die Spindelmuttern (15, 16) drehfest und parallel zur linearen Bewegungsachse (9) verschieblich in einem Gehäuse (13) geführt sind und die Spindelführung (3) drehbar in dem Gehäuse (13) angeordnet ist und durch den Motor (6) angetrieben ist.

3. Bremse nach Anspruch 1 oder 2, **dadurch gekennzeichnet, dass** die Spindeln gegeneinander drehbar in der Spindelführung (3) geführt sind und die Spindeln (1, 2) gleichsinnige Gewinde aufweisen und motorisch zur gegenläufigen Drehung angetrieben sind.

4. Bremse nach Anspruch 1, **dadurch gekennzeichnet, dass** die Spindelmuttern (15, 16) drehbar und parallel zur linearen Bewegungsachse (9) verschieblich in einem Gehäuse (13) geführt sind und durch den Motor (6) angetrieben sind und die Spindelführung drehfest in dem Gehäuse (13) angeordnet ist.

5. Bremse nach einem der voranstehenden Ansprüche, **dadurch gekennzeichnet, dass** der Bremszylinderkolben (17) in einem Bremszylinder (18) geführt ist, der senkrecht zur linearen Bewegungsachse (9) angeordnet ist und dass zwischen dem Bremszylinderkolben (17) und den einander zugewandten Seiten (19, 20) der Spindelmuttern (15, 16) symmetrische Keilflächen (24) angeordnet sind.

6. Bremse nach einem der voranstehenden Ansprüche, **dadurch gekennzeichnet, dass** die Spindeln (1, 2) gegenläufige Gewinde aufweisen und die Spindeln (1, 2) zur gleichsinnigen Drehung relativ zueinander angetrieben sind oder die Spindelmuttern (15, 16) zur gleichsinnigen Drehung relativ zueinander angetrieben sind.

7. Bremse nach einem der Ansprüche 1 bis 5, **dadurch gekennzeichnet, dass** die Spindeln (1, 2) gleichsinnige Gewinde aufweisen und die Spindelmuttern (15, 16) oder die Spindeln (1, 2) zur gegensinnigen Drehung relativ zueinander angetrieben sind.

8. Bremse nach einem der voranstehenden Ansprüche, **dadurch gekennzeichnet, dass** der Motor (6) ein abhängig von einem Kraftaufnehmer (27) gesteuerter Elektromotor ist, wobei der Kraftaufhehmer (27) eingerichtet ist, die Kraft zu bestimmen, die von dem Bremszylinderkolben (17) auf zumindest eine Spindelmutter (15, 16) aufgebracht wird.

9. Bremse nach einem der voranstehenden Ansprüche, **dadurch gekennzeichnet, dass** der Motor (6) ein abhängig von einem Wegaufnehmer (28) gesteuerter Elektromotor ist, wobei der Wegaufnehmer (28) eingerichtet ist, den Weg oder die Stellung zumindest einer Spindelmutter (15, 16) im Gehäuse zu bestimmen.

10. Bremse nach einem der voranstehenden Ansprüche, **gekennzeichnet durch** einen Mikrokontroller, der eingerichtet ist, in Abwesenheit von Druck auf den Bremszylinderkolben (17) den Motor (6) zur Drehung der Spindeln (1, 2) zu steuern, bis der Kraftaufhehmer (27) eine von der Spindel (1, 2) wirkende, steil ansteigende Kraft als Signal für einen Abstand der Bremsbacken aufnimmt, in dem daran angebrachte Bremsbeläge an einer Bremsscheibe anliegen, und der Mikrokontroller eingerichtet ist, den Motor (6) zur Drehung der Spindeln (1, 2) um einen vorbestimmten Betrag in Gegenrichtung zu steuern.

11. Bremse nach einem der voranstehenden Ansprüche, **gekennzeichnet durch** Druckfedern (23), die eingerichtet sind, die Spindelmuttern (15, 16) gegen die Belastung durch den Bremszylinderkolben (17) zu belasten.

12. Bremse nach Anspruch 9, eventuell nach Anspruch 10 oder 11 falls abhängig vom Anspruch 9, **dadurch gekennzeichnet, dass** der Motor (6) gesteuert ist, die Spindeln (1, 2) bei Überschreitung eines vorgegebenen Werts für den Weg der Spindelmuttern (1, 2) durch den von dem Wegaufhehmer (28) aufgenommenen Weg zu drehen, bis die Spindeln (1, 2) oder die Spindelmuttern (15, 16) um den Betrag der Überschreitung aufeinander zu bewegt sind.

13. Bremse nach einem der voranstehenden Ansprüche, **dadurch gekennzeichnet, dass** der Motor (6) mit einer Steuerung zur Drehung der Spindeln (1, 2) in eine Stellung geringsten Abstands der Spindeln (1, 2) oder der Spindelmuttern (15, 16) voneinander versehen ist.

14. Bremse nach einem der voranstehenden Ansprüche, **gekennzeichnet durch** einen Mikrokontroller, der eingerichtet ist, den Weg, um den die Spindeln (1, 2) bei Anordnung von Bremsbelägen bekannter Dicke an den Bremsbacken durch Drehung mittels des Motors (6) bewegt werden, als Maß für den Verschleiß einer zwischen den Bremsbelägen angeordneten Bremsscheibe zu übermitteln.

## Claims

1. Brake having two caliper arms between which a force generating device is arranged, wherein the force generating device has two spindles (1, 2) arranged on a common linear axis of movement (9), **characterized in that** the first ends (4, 5) of the spindles are arranged torque-proof and slidable along the linear axis of movement (9) in a spindle guidance (3), wherein the second ends (10, 11) of the spindles (1, 2) opposite the first ends (4, 5) are pivoted on the caliper arms, a spindle nut (15, 16) is engaged with each spindle (1, 2) and the spindle nuts (15, 16) can be loaded by a break cylinder piston (17) to which pressure can be applied, in opposite directions along the linear axis of movement (9) and the spindles (1, 2) and the spindle nuts (15, 16) are driven by a motor (6) to a rotation relative to one another.

2. Brake according to claim 1, **characterized in that** the spindle nuts (15, 16) are guided torque-proof and slidable in parallel to the linear axis of movement (9) in a housing (13) and the spindle guidance (3) is arranged torque-proof in the housing (13) and is driven by the motor (6).

3. Brake according to claim 1 or 2, **characterized in that** the spindles are guided in the spindle guidance (3) rotatable against one another and the spindles (1, 2) have threads in the same direction and are motor-driven for contra-directional rotation.

4. Brake according to claim 1, **characterized in that** the spindle nuts (15, 16) are guided in a housing (13) rotatable and slidable in parallel to the linear axis of movement (9) and are driven by the motor (6) and the spindle guidance is arranged torque-proof in the housing (13).

5. Brake according to one of the preceding claims, **characterized in that** the brake cylinder piston (17) is guided in a brake cylinder (18), which is arranged in perpendicular to the linear axis of movement (9) and **in that** between the brake cylinder piston (17) and the sides (19, 20) of the spindle nut (15, 16) facing one another, symmetrical wedge faces (24) are arranged.

6. Brake according to one of the preceding claims, **characterized in that** the spindles (1, 2) have contra-rotational threads and the spindles (1, 2) are driven for rotation in the same direction relative to one another or the spindle nuts (15, 16) are driven for rotation in the same direction relative to one another.

7. Brake according to one of the claims 1 to 5, **characterized in that** the spindles (1, 2) have threads in the same direction and the spindle nuts (15, 16) or the spindles (1, 2) are driven for rotation in the same direction relative to one another.

8. Brake according to one of the preceding claims, **characterized in that** the motor (6) is an electric motor controlled in dependence from a force sensor (27), wherein the force sensor (27) is arranged to determine the force which is applied by the brake cylinder piston (17) on at least one spindle nut (15, 16).

9. Brake according to one of the preceding claims, **characterized in that** the motor (6) is an electric motor which is controlled in dependence on a displacement transducer (28), wherein the displacement transducer (28) is arranged to determine the displacement or the position of at least one spindle nut (15, 16) in the housing.

10. Brake according to one of the preceding claims, **characterized by** a microcontroller which is arranged to control the motor (6) for turning the spindles (1, 2) in the absence of pressure onto the brake cylinder piston (17) until the force sensor (27) registers a force originating from the spindle (1, 2), steeply increasing as a signal for the distance of the brake clips, in which brake linings attached thereto lie against a brake disc and the microcontroller is set up to control the motor (6) for rotation of the spindles (1, 2) by a predetermined amount in the counter-direction.

11. Brake according to one of the preceding claims, **characterized by** pressure springs (23) which are set up to load the spindle nuts (15, 16) against the load by the brake cylinder piston (17).

12. Brake according to claim 9, optionally according to claim 10 or 11 if dependent on claim 9, **characterized in that** the motor (6) is controlled to turn the spindles (1, 2) upon exceeding a predetermined value for the displacement of the spindle nuts (1, 2) by the displacement registered by the displacement transducer (28), until the spindles (1, 2) or the spindle nuts (15, 16) are moved towards one another for the value of the exceeding.

13. Brake according to one of the preceding claims, **characterized in that** the motor (6) is provided with a control for rotating the spindles (1, 2) into a position of smallest distance of the spindles (1, 2) or of the spindle nuts (15, 16) from one another.

14. Brake according to one of the preceding claims, **characterized by** a microcontroller which is set up to transmit the displacement by which the spindles (1, 2), when provided with brake linings of known thickness to the brake clips, are moved by rotation by means of the motor (6) as a measure for the wear of a brake disc which is arranged between the brake linings.

## Revendications

1. Frein à deux bras de pince, entre lesquels est agencé un dispositif de génération de force, **caractérisé en ce que** le dispositif de génération de force comprend deux broches (1, 2) disposées sur un axe de déplacement linéaire commun (9), **caractérisé en ce que** ses premières extrémités (4, 5) sont bloquées en rotation et mobiles le long de l'axe de déplacement linéaire dans une douille (3), que les secondes extrémités (10, 11) des broches (1, 2) opposées aux premières extrémités (4, 5) sont articulées contre les bras de pince, qu'un écrou de broche (15, 16) est en prise avec chaque broche (1, 2), que les écrous de broche (15, 16) peuvent être contraints dans des directions opposées le long de l'axe de déplacement linéaire par un piston cylindre de frein (17) pouvant être soumis à une pression et que les broches (1, 2) et les écrous de broche (15, 16) sont entraînés en rotation les uns par rapport aux autres par un moteur (6).

2. Frein selon la revendication 1, **caractérisé en ce que** les écrous de broche (15, 16) sont bloqués en rotation et mobiles dans un logement (13) de manière parallèle à l'axe de déplacement linéaire (9) et que la douille est rotative dans le logement (13) et entraînée par le moteur (6).

3. Frein selon les revendications 1 ou 2, **caractérisé en ce que** les broches sont rotatives l'une par rapport à l'autre dans la douille (3), que les broches (1, 2) présentent un filet orienté dans le même sens et qu'elles sont entraînées par un moteur pour tourner en sens opposé.

4. Frein selon la revendication 1, **caractérisé en ce que** les écrous de broche (15, 16) sont rotatifs et mobiles dans un logement (13) de manière parallèle à l'axe de déplacement linéaire (9) et que la douille est bloquée en rotation dans le logement (13).

5. Frein selon l'une des revendications précédentes, **caractérisé en ce que** le piston cylindre de frein (17) est guidé dans un cylindre de frein (18), qui est vertical par rapport à l'axe de déplacement linéaire (9) et que des surfaces cunéiformes symétriques (24) sont prévues entre le piston cylindre de frein (17) et les côtés (19, 20) des écrous de broche (15, 16) se faisant face.

6. Frein selon l'une des revendications précédentes, **caractérisé en ce que** les broches (1, 2) présentent des filets opposés, que les broches (1, 2) sont entraînées dans le même sens de rotation l'une par rapport à l'autre ou bien que les écrous de broche (15, 16) sont entraînés dans le même sens de rotation l'un par rapport à l'autre.

7. Frein selon l'une des revendications 1 à 5, **caractérisé en ce que** les broches (1, 2) présentent des filets orientés dans le même sens et que les écrous de broche (15, 16) ou les broches (1, 2) sont entraînés en rotation les uns par rapport aux autres.

8. Frein selon l'une des revendications précédentes, **caractérisé en ce que** le moteur (6) est un moteur électrique commandé en fonction d'un capteur de force (27),
dans lequel le capteur de force est prévu pour définir la force qui sera appliquée par le piston cylindre de frein (17) sur au moins un écrou de broche (15, 16).

9. Frein selon l'une des revendications précédentes, **caractérisé en ce que** le moteur (6) est un moteur électrique commandé en fonction d'un capteur de force (28),
dans lequel le capteur de déplacement (28) est prévu pour définir le trajet ou bien la position au moins d'un écrou de broche (15, 16) dans le logement.

10. Frein selon l'une des revendications précédentes, **caractérisé par** un microcontrôleur, conçu pour commander la rotation des broches (1, 2) par le moteur selon l'absence de la pression en provenance du piston cylindre de frein (17), jusqu'à ce que le capteur de force (27) enregistre une force en progression rapide, à partir de la broche (1, 2) comme signal correspondant à la distance séparant les mâchoires de frein, de sorte que les garnitures de frein posées sur celles-ci appuient sur un disque de frein, et le microcontrôleur (22) est agencé pour commander le moteur (16) et assurer la rotation des broche (1, 2) dans le sens opposé et ce, d'un degré prédéterminé.

11. Frein selon l'une des revendications précédentes, **caractérisé par** des ressorts de compression (23), conçus pour contraindre les écrous de broche (15, 16) à s'opposer à la force du piston cylindre de frein (17).

12. Frein selon la revendication 9, éventuellement selon les revendications 10 ou 11 liées à la revendication 9, **caractérisé en ce que** le moteur (6) est commandé, pour faire tourner les broches (1, 2) en cas de dépassement d'une valeur prédéterminée pour la course des écrous de broche (19), sur la course enregistrée par le capteur de déplacement (28) jusqu'à ce que les broches (1, 2) ou les écrous de broche (15, 16), course correspondant au dépassement.

13. Frein selon l'une des revendications précédentes, **caractérisé en ce que** le moteur (16) est muni d'un système de commande pour assurer la rotation des broches (1, 2) dans une position présentant une distance minimale séparant les broches (1, 2) ou les écrous de broche (15, 16).

14. Frein selon l'une des revendications précédentes, **caractérisé par** un microcontrôleur (22), conçu pour déterminer la course correspondant au déplacement des broches (1, 2) en fonction de la disposition de garnitures de frein d'épaisseur connue, déplacement au niveau des mâchoires de frein sous l'effet de la rotation imprimée par le moteur (6), et déterminer par conséquent l'usure d'un disque de frein disposé entre les garnitures de frein.
